(19) Europäisches Patentamt
European Patent Office
Office européen des brevets

(11) **EP 4 519 406 B1**

(12) **EUROPEAN PATENT SPECIFICATION**

(45) Date of publication and mention of the grant of the patent:
**15.04.2026 Bulletin 2026/16**

(21) Application number: **23721434.1**

(22) Date of filing: **05.05.2023**

(51) International Patent Classification (IPC):
*C12C 1/02* (2006.01)    *C12C 1/18* (2006.01)
*C12C 1/047* (2006.01)    *C12C 1/16* (2006.01)

(52) Cooperative Patent Classification (CPC):
**C12C 1/02; C12C 1/047; C12C 1/16; C12C 1/18; C12C 12/00**

(86) International application number:
**PCT/EP2023/062057**

(87) International publication number:
**WO 2023/214077 (09.11.2023 Gazette 2023/45)**

(54) **PEELED CHIT MALT**

GESCHÄLTES SPITZMALZ

CHIT MALT PELÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **05.05.2022 EP 22171877**
**05.05.2022 EP 22171872**
**12.12.2022 EP 22212918**

(43) Date of publication of application:
**12.03.2025 Bulletin 2025/11**

(73) Proprietor: **Heineken Supply Chain B.V.**
**2382 PH Zoeterwoude (NL)**

(72) Inventors:
• **VISSCHER, Hendrik Jan**
**2382 PH Zoeterwoude (NL)**
• **BEKKERS, Augustinus Cornelius Al.P. A.**
**2382 PH Zoeterwoude (NL)**
• **VISSENAEKENS, Johan Franciscus Maria**
**2382 PH Zoeterwoude (NL)**
• **HOEKMAN, Christine Lidian**
**2382 PH Zoeterwoude (NL)**

(74) Representative: **Nederlandsch Octrooibureau**
**P.O. Box 29720**
**2502 LS The Hague (NL)**

(56) References cited:
GB-A- 1 403 391    GB-A- 445 650
US-A- 3 647 473    US-A- 4 004 034

• **AGU R C ET AL: "Malting performance of normal Huskless and acid-Dehusked Barley samples", JOURNAL OF THE INSTITUTE OF BREWING, INSTITUTE OF BREWING. LONDON, GB, vol. 108, no. 2, 1 September 2002 (2002-09-01), pages 215 - 220, XP002970257, ISSN: 0046-9750**

Remarks:
The file contains technical information submitted after the application was filed and not included in this specification

EP 4 519 406 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD OF THE INVENTION

The present invention relates to peeled chit malt that is obtained by a process comprising peeling of chit malt, said malt having the following combination of features:

- a moisture content of less than 15 wt.%;
- an alpha-amylase activity of less than 58 Dextrinizing Units (DU) per gram of dry matter;
- an extract content of solid adjuncts ($C_E$) of at least 79% by weight of dry matter; and
- a Klason lignin content ($C_L$) of less than 1.8% by weight of dry matter; and
- an ash content ($C_A$) of less than 2.2 % by weight of dry matter;

wherein

$$25 \leq C_E/(C_L * C_A) \leq 160.$$

The invention also relates to a process of preparing a peeled chit malt, said process comprising:

- providing chit malt; and
- peeling the chit malt to produce a peeled chit malt.

Further provided is a method of producing wort, the method comprising

- providing a mixture comprising malt and water, wherein at least 1 wt.% of the malt is a peeled chit malt according to the invention;
- mashing the mixture to convert starch into fermentable sugars and to produce a mash containing fermentable sugars; and
- subjecting the mash containing fermentable sugars to a solid-liquid separation to separate wort from insoluble matter.

## BACKGROUND OF THE INVENTION

Malt is germinated cereal grain that has been produced in a process known as "malting". Malting is a process of steeping, germinating, drying and deculming grain to convert it into malt. The main purpose of the malting process is to develop the endogenous enzymes $\alpha$-amylase and $\beta$-amylase. These enzymes catalyse the conversion of starch into fermentable sugars when malt is used to produce a wort, i.e. the liquid extracted from the mashing process during the brewing of beer or whisky. Various grains are used for malting; the most common are barley, sorghum, wheat and rye. The malted grains obtained by malting barley or rye still contain the outer husk.

Steeping is the start of the malting process and comprises the addition of steep water to cover the grain to increase the moisture content of the grain to between 40 and 45%. In a modern pneumatic malt house, the grain is alternatively submerged (wet stand) and then drained (an air rest) for one, two or three cycles to achieve the target grain moisture content and the desired chit count. The chit is the first sign of the emerging rootlets. At the end of steeping the grain is cast-out to germination.

The aim of germination is to sprout the grains. During sprouting, malt enzymes are activated and these enzymes start modifying the structure of the barley endosperm by breaking down the cell walls and the protein matrix. Germination produces a large amount of heat. The grain bed is maintained at a constant temperature of between 10 and 16 °C by the constant supply of fresh humidified air and turners move through the grain bed to keep it loose to allow for sufficient air-flow. Germination typically takes 4-6 days and results in what is called "green malt".

Kilning reduces the grain moisture content of the green malt and stops the germination process. In the first stage, the free drying stage, the air temperature is kept cool to dry the grain without causing the enzymes to denature. As the grain dries it is possible to raise the air temperature (the second stage or the forced drying stage) to further dry the grain without inactivating the amylase enzymes. The target malt moisture after kilning is around 5% by weight. At the final drying stage colour and the malty aroma are formed by Maillard reactions.

Deculming is the term used for the removal of rootlets of the malt. Deculming is normally carried out shortly after transfer from the kiln.

"Chit malt" is a special type of malt that differs from ordinary malt in that it is obtained by a process that employs a shortened germination period of typically 1-2 days. In comparison to ordinary malt, the alpha-amylase activity of chit malt is considerably lower. Whereas ordinary malt typically has an alpha-amylase activity (EBC 4.13) of around 64 dextrinising units (DU) per gram of dry matter, chit malt obtained after 1 day of germination typically has an alpha amylase activity of less than 58 DU per gram of dry matter.

"Peeling" is a mechanical treatment that is used to remove tissue, e.g. husk and/or bran, from grains by mechanical abrasive action.

US 4,004,034 and GB140391 describe a process for the manufacture of a wort which comprises subjecting barley to at least one treatment cycle comprising a steeping in water followed by exposure to air, the conditions of temperature and the duration of the stages of this cycle being chosen to cause chitting of the barley to form chit malt and to promote the development of a maximum enzymatic potential, rolling the chit malt, drying the rolled chit malt to stop the development of the biological processes occurring in it while retaining its enzymatic potential, grinding the dried and rolled chit malt and extracting it with a mixture of hot water and malt, the quantity of malt being 10 to 40% by weight on a solids basis of the dry weight of the mixture of ground chit and malt, and separating the wort so produced.

US 3,708,002 describes a method of malting cereal grain in which prior to malting a proportion of the outer layers of untreated grain is removed by mechanical treatment, the amount of the outer layers removed being insufficient to substantially reduce the germination of the grain.

US 3,647,473 describes a process for preparing malted cereal grain comprising the steps of

- dehusking grain by a dry mechanical method so as to damage the grain sufficiently to prevent substantial rootlet growth without substantially damaging the aleurone layer and
- malting the so dehusked grain.

Holmes, M. Glennie. "The pearling of barley malt as an early generation selection tool in barley breeding programmes." Journal of the Institute of Brewing 96.1 (1990): 21-26 describes the determination of malt hardness by pearling as a method to assess the malting potential of malts from a breeding programme.

Holmes, M. Glennie. "The use of partially-modified barley for malting quality assessment." Journal of the Institute of Brewing 97.4 (1991): 283-289 describes an investigation in which characteristics of partially-modified barleys were investigated using Near Infrafred Reflectance Spectrophotometry (NIR), Pearling Resistance (PR), changes in Viscosity of Acidic Extracts, and changes in weight and translucency of the cut surface of boiled grains.

Agu R C et al. "Malting performance of normal huskless and acid-dehusked Barley samples." Journal of the Institute of Brewing 108.2 (2002): 215-220 describes the influence of dehusking on malting performance.

DE 44 28 978 describes a process in which a) the malt is homogeneously dried in such a way that it has a water content of 20 to 10% by weight b) the malt is degerminated, c) the malt grains are dehusked, the husks are separated from the malt grains, d) the malt grains are milled and e) the malt is irradiated by microwaves and in the course of this on the one hand dries in such a manner that the residual water content is at most 8% by weight and, on the other hand, colour and aroma are formed.

GB445650 describes a method for dehusking malted grains.

WO 2007/121594 relates to a method and a system for dehusking grains, in particular for removing the spelts and/or the seed coat and the germ bud of grains and/or of malted grains and its processing in the brewing industry.

Viking™ Pearled Black Malt is a commercially available malt that is produced by pearling barley before malting and roasting. This malt has no amylolytic activity and the amount of fermentable extract is low. It is used in dark beers like stouts and porters, mainly for its strong colouring ability.

To reduce the total carbon footprint of malt production it is desirable to increase the productivity of malt houses and to improve the efficiency of transport and storage.

## SUMMARY OF THE INVENTION

The inventors have developed a novel type of malt that delivers the aforementioned benefits and that can suitably be used to substitute at least a part of ordinary malt that is used in the production of e.g. beer.

The malt of the present invention can be produced by a malting process that differs from the process that is used to produce ordinary malt in that it employs a shortened germination period of 12 to 72 hours, and further in that it employs a peeling step after kilning. The peeled chit malt so obtained is characterized by a relatively low alpha-amylase activity, a low husk content and a high extract content. The low husk content of the peeled chit malt is evident from the low lignin content and the low ash content of the peeled chit malt. Since, contrary to husk, the endosperm of barley does not contain lignin, removal of husk from the chit malt inherently results in a reduction of lignin content. Likewise, since husk contains virtually no starch, removal of husk also inherently results in an increase of extract content.

Accordingly, a first aspect of the invention relates to a peeled chit malt that is obtained by a process comprising peeling of chit malt, said malt having the following combination of features:

- a moisture content of less than 15 wt.%;

- an alpha-amylase activity of less than 58 Dextrinizing Units (DU) per gram of dry matter;
- an extract content of solid adjuncts ($C_E$) of at least 79% by weight of dry matter; and
- a Klason lignin content ($C_L$) of less than 1.8% by weight of dry matter; and
- an ash content ($C_A$) of less than 2.2 % by weight of dry matter;

wherein

$$25 \leq C_E/(C_L*C_A) \leq 160.$$

The requirement $C_E/(C_L*C_A) \geq 25$ reflects that the peeled chit malt of the present invention combines a high extract content with a low lignin content and a low ash content. The requirement $C_E/(C_L*C_A) \leq 160$ indicates that a non-negligible amount of husk is still present. Complete removal of the husk is economically unattractive as it is inevitably accompanied by loss of starch.

Thanks to the removal of husk, the bulk density of the peeled chit malt is increased significantly. Thus, in comparison to ordinary malt, the space and energy required for transportation and storage of the peeled chit malt are reduced.

Another aspect of the present invention relates to a process of preparing apeeled chit malt, said process comprising:

- providing chit malt; and
- peeling the chit malt to produce a peeled chit malt.

The peeled chit malt of the present invention offers the advantage that its production requires considerably less time and energy than the production of ordinary malt as the germination period is reduced from 5-6 days to not more than 3 days.

Since a substantial part of the husk has been removed from the peeled chit malt of the present invention, substantially less transportation volume and storage volume is needed. Besides, the integrity of the malt is increased due to the removal of biological load.

Efficiency gains can also be made in the production of wort by using the peeled chit malt of the present invention. By employing a malt blend containing the peeled chit malt of the present invention, the application of excessive husk in the lautering step can be avoided and brewhouse yield and capacity can be improved.

The inventors have recognized that in the production of wort, use of malt having low alpha-amylase activity is not problematic if such malt is combined with an adequate amount of ordinary malt, as present-day ordinary malt contains a surplus of amylase activity. In addition, or alternatively, the loss of alpha-amylase activity may be compensated for by employing added alpha-amylase during mashing. Thus, the peeled chit malt of the present invention can suitably be used to replace at least a part of ordinary malt in the production of wort, without any adverse effect on the quality of the wort or the quality of the malt beverage obtained after fermentation of the wort.

Accordingly, the present invention also provides a malt blend comprising:

- 50-98 wt.% of an ordinary malt having an alpha-amylase activity of at least 58 Dextrinizing Units (DU) per gram of dry matter; and
- 2-50 wt.% of a peeled chit malt according to the present invention.

Yet another aspect of the present invention relates to a method of producing a malt beverage, said method comprising:

- providing a mixture comprising malt and water, wherein at least 1 wt.% of the malt is the peeled chit malt according to the present invention;
- mashing the mixture to convert starch into fermentable sugars and to produce a mash containing fermentable sugars; and
- subjecting the mash containing fermentable sugars to a solid-liquid separation to separate wort from insoluble matter.

**DETAILED DESCRIPTION OF THE INVENTION**

The present invention provides a peeled chit malt that is obtained by a process comprising peeling of chit malt, said malt having the following combination of features:

(i) a moisture content of less than 15 wt.%, as determined by EBC method 4.2 (Moisture Content of Malt);

(ii) an alpha-amylase activity of less than 58 Dextrinizing Units (DU) per gram of dry matter, as determined by EBC method 4.13 (Alpha-amylase Content of Malt);
(iii) an extract content ($C_E$) of at least 79% by weight of dry matter, as determined by EBC method 6.4 (Extract Content of Solid Adjuncts; De Clerck Method);
(iv) a Klason lignin content ($C_L$) of less than 1.8% by weight of dry matter, as determined by the standard method TAPPI T 222 om-02; and
(v) an ash content ($C_A$) of less than 2.2 % by weight of dry matter;

wherein

$$25 \le C_E/(C_L \cdot C_A) \le 160.$$

The term "barley" as used herein refers to husk-carrying grains from the species *Hordeum vulgare.* Husk-free or "naked" barley *(Hordeum vulgare* L. var. *nudum)* is not encompassed by the term "barley" as used herein.

The term "malt" as used herein refers to germinated barley grains that have been dried.

The term "chit malt" as used herein refers to a malt that has been obtained by germinating barley during a period of 12 hours to 3 days. During this germination step, alpha-amylase is activated.

The term "peeled chit malt" as used herein refers to a chit malt from which most of the original husk has been mechanically removed. At least a part of the husk is removed after malting. Besides husk, also pericarp, testa and aleurone may have been mechanically removed from the chit malt.

The term "peeling" as used herein refers to the application of abrasion and/or friction to remove husk from malt. Peeling can be done, for instance, by using pearling equipment which typically employs grinding stones, or by using a dehusker/dehuller in which husk is removed by passing the malt between rotating rollers.

The term "husk" as used herein refers to the outer layer of malted barley grains that surrounds the pericarp layer.

The term "aleurone layer" as referred to herein refers to a layer of living endosperm cells that encloses the outer surface of the starchy endosperms of a grain.

The term "steeping" as used herein refers to a procedure in which grains are covered with steep water to increase the moisture content of the grain ('wet stand'). The wet stands may be interrupted by so called 'dry stands', during which the water is drained out and fresh air may be supplied to remove excess carbon dioxide.

The term "germinating" as used herein refers to the procedure in which a bed of steeped grains is allowed to germinate under humid conditions.

The term "beer" as used herein refers to a yeast fermented malt beverage that has optionally been hopped. Beer is commonly produced by a process that comprises the following basic steps:

- mashing a mixture comprising malted grains, preferably malted barley, optionally supplementary grains and water to produce a mash;
- separating the mash in wort and spent grains;
- boiling the wort to produce a boiled wort;
- fermenting the boiled wort with live yeast to produce a fermented wort;
- subjecting the fermented wort to one or more further process steps (e.g. maturation and filtration) to produce beer; and
- packaging the beer in a sealed container, e.g. a bottle, can or keg.

Hop or hop extract is usually added during wort boiling to produce hopped beer. Depending on the beer style and brewing facility, the employed hopping method and timing may vary.

Whenever reference is made herein to a standard method, such as an EBC method, the standard method meant is the last version of the standard method that was published before 5 May 2022.

Ordinary malt comprises a core that is composed of starchy endosperm (distal end) and germinated embryo (proximal end). The outside of the starchy endosperm that is not adjacent the scutellum that separates the starch endosperm from the germinated embryo is covered (going from the inside to the outside) by an aleurone layer, testa, pericarp and husk.

The peeled chit malt according to the present invention preferably has been dried to a moisture content of less than 12 wt.%, more preferably to a moisture content of 2 to 10 wt.%, even more preferably to a water content of 2.5 to 8 wt.%, and most preferably to a moisture content of 3 to 7 wt.%, as determined by EBC 4.2.

The peeled chit malt preferably has an alpha-amylase activity of 1-50, more preferably of 2-40, most preferably of 4-32 Dextrinizing Units (DU) per gram of dry matter as determined by EBC method 4.13.

The extract content of the peeled chit malt of the present invention, as determined by EBC method 6.4, preferably is at least 80% by weight of dry matter, more preferably 81-86% by weight of dry matter and most preferably 82-85% by weight of dry matter.

According to a particularly preferred embodiment, the Klason lignin content of the peeled chit malt is less than 1.5% by weight of dry matter, more preferably less 1.2% by weight of dry matter, even more preferably less than 1.1% by weight of dry matter and most preferably less than 1.0% by weight of dry matter.

The ash content of the peeled chit malt preferably is less than 2.1% by weight of dry matter, more preferably less 2.0% by weight of dry matter, even more preferably less than 1.9% by weight of dry matter and most preferably less than 1.8% by weight of dry matter.

The ratio $C_E/(C_L*C_A)$ preferably is in the range of 28 to 150, more preferably in the range of 32 to 120 and most preferably in the range of 35 to 100.

The peeled chit malt preferably has a beta-amylase activity of at least 2 units per gram of dry matter, more preferably at least 4 units per gram of dry matter, most preferably 6-40 units per gram of dry matter, as determined using Megazyme β-amylase assay kit (Betamyl-3). Preferably, the beta-amylase activity of the peeled chit malt does not exceed 30 units per gram of dry matter, more preferably it does not exceed 20 units per gram of dry matter, most preferably it does not exceed 15 units per gram of dry matter.

The ratio of beta-amylase activity of the peeled chit malt, expressed in units per gram of dry matter, to the alpha-amylase activity of the peeled chit malt, expressed as DU per gram of dry matter, preferably is in the range of 1:10 to 2:1, more preferably in the range of 1:5 to 1.5:1, and most preferably in the range of 1:4 to 1:1.

According to a preferred embodiment, the peeled chit malt has a Kolbach Index of 5-35%, more preferably of 8-30%, most preferably of 10-25% as determined by EBC method 4.9.3 (Soluble Nitrogen of Malt: Dumas Combustion Method).

The final attenuation of the peeled chit malt as determined by EBC 4.11.1 preferably exceeds 30%. More preferably, said final attenuation is in the range of 35% to 80%, even more preferably in the range of 40% to 70% and most preferably in the range of 52% to 65%.

The peeled chit malt of the present invention preferably has a pH as determined by EBC 8.17 (pH of Wort) of at least 4.9, more preferably of at least 5.0. Typically, this pH does not exceed 6. Optimum pH is around 5.4. At pH lower than 4.9 both alpha-amylase and beta-amylase are inactivated.

The colour of malt can be determined spectrophotometrically according to EBC 4.7.2 (Colour of Malt: Visual Method. Preferably the colour of the peeled chit malt is 1-10 EBC, more preferably 1.5-8 EBC, most preferably 2-4 EBC.

The colour contribution of malt to beer can also be determined using MEBAK R-205.07.110 [2016-03] (A). Preferably, the colour value of the peeled chit malt as determined by this method is at least 2.0, more preferably 2.0 to 3.2 and most preferably 2.1 to 3.0.

According to a particularly preferred embodiment, the peeled chit malt of the present invention closely resembles ordinary malt in terms of the flavour and colour contribution it provides to the final beverage. This is why the kilning step that is used to remove water from the green malt is preferably carried out under conditions similar to those used in ordinary malt production. The kilning step has an important impact on both flavour and colour of the malt as it typically employs high temperatures that promote Maillard reactions, oxidation reactions and caramelization.

The thiobarbituric acid value, or TBZ value, represents the content of carbonyl compounds including aldehydes (e.g. 5-hydroxymethylfurfural) and ketones, which are influenced by the heat load employed during malt kilning. Typically, the peeled chit malt of the present invention has a TBZ value of at least 2, more preferably of at least 3, even more preferably of 5 to 12 and most preferably of 5.5 to 10, as determined by using the analysis method of the American Society of Brewing Chemists "Thiobarbituric Acid Index 2009". The thiobarbituric acid index method is applied to wort that has been prepared using the European Brewery Convention (EBC) method 4.5.1. (Extract of Malt: Congress Mash),

For a malty aroma, 4-hydroxy-2,5-dimethyl-3(2H)-furanone (HDMF) is an important contributor that is formed by the Maillard reaction during kilning. The peeled chit malt of the present invention preferably comprises at least 0.3 mg/kg of HDMF, more preferably at least 0.5 mg/kg of HDMF, even more preferably 0.8 to 20 mg/kg of HDMF, yet more preferably 1 to 15 mg/kg of HDMF and most preferably 1.5 to 10 mg/kg HDMF. The HDMF content may suitably be determined using the method described by Mackie and Slaughter (Formation of 4-hydroxyfuranones and their precursors during production of worts and beers, J. Inst. Brew. (2002)108, 336-343).

Preferably, the peeled chit malt of the invention has a S-methyl methionine content, expressed as dimethyl sulphide equivalent of less than 100 μg per gram of dry matter, more preferably 0.01-10 μg per gram of dry matter, most preferably 0.05-1 μg per gram of dry matter. The S-methyl methionine content can suitably be determined by LC-MS/MS.

Preferably, the peeled chit malt has a dimethyl sulphide content of less than 10 μg per litre of dry matter, more preferably less than 6 μg per gram of dry matter, most preferably less than 0.2 μg per gram of dry matter, as determined by GC-MS/MS.

During germination, the root embryo of the barley grains secretes a plant hormone called gibberellic acid, which initiates the synthesis of α-amylase. In some malting operations, gibberellic acid is sprayed onto the barley to speed germination. Bromates are sometimes used to suppress rootlet growth and malting loss.

The chit malt of the present invention preferably has been obtained by a malting process in which no gibberellic acid or bromate has been applied.

It is known to use hydrogen peroxide or ozone during steeping to promote barley acrospire growth. The peeled chit malt of the present invention preferably has been obtained by a malting process in which no hydrogen peroxide or ozone has been applied.

It is known to add enzymes (e.g. amylolytic, proteolytic and/or alpha-glycanasic enzymes) during the production of chit malt in order to boost the enzymatic activity. The peeled chit malt of the present invention preferably does not contain enzyme activity originating from microbial sources, more preferably it does not contain enzyme activity from other sources than barley.

According to a particularly preferred embodiment, the peeled chit malt of the present invention has been ground. Grinding of the malt offers the advantage that in the brewing house the malt can be introduced directly into the mash. Furthermore, grinding of the peeled chit malt can be used to increase the bulk density of the malt, thereby reducing the volume needed for transportation and storage. Unlike ordinary malt, the peeled chit malt of the present invention can be ground without generating a lot of dust.

Preferably the bulk load density (freely settled) of the ground malt according to the invention is at least 54-kg/hl, more preferably at least 58 kg/hl, most preferably 60-67 kg/hl. The bulk load density of the ground malt can suitably be determined by means of a chondrometer.

Preferably the particle size distribution of the ground malt, as determined using a set of sieves, is as follows:

- less than 20 wt.% > 1.0 mm

- not more than 15 wt.% ≤ 0.15 mm

More preferably the particle size distribution of the ground malt is as follows:

- less than 15 wt.% > 1.0 mm

- not more than 10 wt.% ≤ 0.15 mm

Most preferably the particle size distribution of the ground malt is as follows:

- less than 10 wt.% > 1.0 mm

- not more than 5 wt.% ≤ 0.15 mm

Milling of the peeled chit malt also offers the advantages that the variation in particle size may be minimized, especially if fines are removed after milling. Accordingly, in a preferred embodiment, the ground malt contains less than 2 wt.%, more preferably less than 1 wt.% of fines having a particle size of not more than 0.15 mm.

According to a particularly preferred embodiment, the ground peeled chit malt is packaged for transportation in a bag or a container. Typically, the bag or container holds at least 50 kg of the ground peeled chit malt.

The peeled chit malt of the present invention may suitably be produced by a process as described herein below.

Another aspect of the invention concerns a process of preparing a peeled chit, said process comprising:

- providing chit malt; and
- peeling the chit malt to produce a peeled chit malt.

According to a particularly preferred embodiment, the present process yields a peeled chit malt as described herein before.

Preferably, the present process is an industrial process wherein at least 10 tons, more preferably at least 30 tons, even more preferably at least 50 tons, most preferably at least 70 tons of peeled chit malt are prepared within 1 week.

The chit malt that is employed in the present process may have been partially dehusked prior to malting. Partial dehusking prior to malting offers the advantage that less water is needed for steeping the barley and that less energy is needed to remove it by drying. Partial dehusking prior to malting should be carried out carefully as the barley grains should not be damaged to the extent they lose the ability to germinate. Preferably, the barely grains are not dehusked prior to malting.

According to a particularly preferred embodiment of the present process, not all of the husk is removed from the chit malt by the peeling. Complete removal of the husk inevitably is accompanied by starch losses.

The chit malt that is provided in the present process preferably has a moisture content of not more than 15 wt.%, more preferably of not more than 12 wt.% and most preferably of 2-10 wt.%, as determined by EBC method 4.2.

The alpha-amylase activity of the chit malt that is provided in the present process preferably is less than 58 DU per gram of dry matter, more preferably in the range of 1-50 DU per gram of dry matter, more preferably 2-40 DU per gram of dry matter and most preferably in the range of 4-32 DU per gram of dry matter, as determined by EBC method 4.13

The chit malt that is provided in the present process preferably has an extract content of not more than 81% by weight of dry matter, more preferably of not more than 80% by weight of dry matter and most preferably of 72-79% by weight of dry matter, as determined by EBC method 6.4

The peeling step preferably increases the extract content of the chit malt by at least 1%, more preferably by at least 1.5% and most preferably by 2 to 10% (extract content being determined by EBC method ). Here the percentage increase is calculated as:

$$100\% \times ([EC_{after}] - [EC_{before}]) / [EC_{before}]$$

wherein

$EC_{before}$] represents the extract content after peeling;
[$EC_{after}$] represents the extract content before peeling.

The lignin content of the chit malt that is provided in the present process preferably is in the range of 1.5-4.0% by weight of dry matter, more preferably in the range of 1.6-3.5% by weight of dry matter and most preferably in the range of 1.7-3.0% by weight of dry matter, as determined by the standard method TAPPI T 222 om-02.

In the peeling step, preferably at least 25 wt.%, more preferably at least 35 wt.% and most preferably at least 40 wt.% of the lignin is removed (lignin content being determined by the standard method TAPPI T 222 om-02).

As it is practically impossible to remove all lignin without also removing starch and thereby reducing extract content of the malt, it is preferred not to remove all lignin present in the chit malt. Preferably, not more than 90 wt.%, even more preferably not more than 80 wt.% of the lignin is removed by peeling in the present process.

The ash content of the chit malt that is peeled in the present process preferably is more than 1.6% by weight of dry matter, more preferably more than 1.8% by weight of dry matter and most preferably in the range of 1.9-3.0% by weight of dry matter.

The chit malt that is provided in the present process may have been deculmed or, alternatively, the culms may be removed from the chit malt during peeling.

The present process preferably does not comprise addition of gibberellic acid, bromate, hydrogen peroxide or ozone.

In a further preferred embodiment, the present process does not comprise addition of amylolytic, proteolytic or alpha-glycanasic enzymes. Even more preferably, the process does not comprise the addition of enzymes.

Typically, the malting process that provides the chit malt used in the present process employs a steeping period of 3 to 30 hours, more preferably 4 to 26 hours, most preferably 5 to 25 hours.

The chit malt that is provided in the process is preferably obtained by a malting process that employs a germination period of 12 hours to 3 days, more preferably of 18 hours to 2 days, most preferably of 20 to 40 hours.

Typically, during germination at least 85%, more preferably at least 90% and most preferably at least 93% of the barley grains develop a visible chit.

During germination of the barley to produce the chit malt, the temperature is preferably maintained at 15 to 25°C, more preferably at 16 to 22°C.

The moisture content of the barley grains is preferably maintained at 30-40 wt.%, more preferably at 33-35 wt.% during the germination.

During the peeling step, the chit malt preferably undergoes a weight reduction of 2-18%, more preferably of 3-15%, most preferably of 5-12%.

Peeling of the chit malt is preferably achieved by passing the chit malt through a grain peeling machine comprising one or more rotatable abrasive rollers.

The chit malt that is peeled in the present process is preferably obtained by a process comprising the following steps:

- providing barley grains;
- mechanically removing husk from the grains, thereby producing dehusked grains and husk material;
- steeping the dehusked grains with aqueous liquid to produce steeped dehusked grains having a moisture content to at least 20 wt.%;
- allowing the steeped dehusked grains to germinate during a period of 12-72 hours; and
- drying the germinated grains to reduce the water content to 9 wt.% or less.

The germination period employed is preferably in the range of 18 hours to 2 days, most preferably of 20 to 40 hours.

During germination, preferably at least 85%, more preferably at least 90% and most preferably at least 93% of the barley grains develop a visible chit.

During germination of the barley, the temperature is preferably maintained at 15 to 25°C, more preferably at 16 to 22°C.

The moisture content of the barley grains is preferably maintained at 30-40 wt.%, more preferably at 33-35 wt.% during the germination.

The germinated grains are preferably dried to reduce the water content to less than 8 wt.%, more preferably to a water content of 1 to 7.5 wt.%, even more preferably to a water content of 2 to 7 wt.% and most preferably to a water content of 3 to 6.5 wt.%, as determined by EBC 4.2.

The drying of the germinated grains is preferably carried out by contacting the germinated grains with hot air.

Preferably, during drying of the germinated grains, the temperature in the grains rises to at least 50°C, more preferably to temperature of at least 60°C, even more preferably to a temperature of 65-100°C and most preferably to a temperature of 70-98°C.

Also provided by the present invention is a malt blend comprising:

- 50-98 wt.% of an ordinary malt having an alpha-amylase activity of at least 58 Dextrinizing Units (DU) per gram of dry matter, as determined by EBC method 4.13;
- 2-50 wt.% of a peeled chit malt according to the present invention.

This malt blend may suitably be used in the production of wort as the blend provides sufficient starch, amylolytic activity and husk (filter bed material) to produce a good quality wort without the use of any adjuncts.

The malt blend preferably contains 60-95 wt.% of ordinary malt and 5-40 wt.% of the peeled chit malt. More preferably, the malt blend contains 65-92 wt.% of ordinary malt and 8-35 wt.% of the peeled chit malt. Most preferably, the malt blend contains 70-90 wt.% of ordinary malt and 10-30 wt.% of the peeled chit malt.

The combination of ordinary malt and the peeled chit malt preferably constitutes 80-100 wt.%, more preferably 90-100 wt.% and most preferably 100 wt.% of the malt blend.

The malt blend preferably has a moisture content of not more than 15 wt.%, more preferably of not more than 10 wt.% and most preferably of not more than 8 wt.%, as determined by EBC method 4.2.

The ordinary malt that is contained in the malt blend preferably has a moisture content of not more than 15 wt.%, more preferably of not more than 12 wt.% and most preferably of 2-10 wt.%, as determined by EBC method 4.2.

The alpha-amylase activity of the ordinary malt preferably is at least 58 DU per gram of dry matter, more preferably in the range of 60-120 DU per gram of dry matter and most preferably in the range of 62-100 DU per gram of dry matter, as determined by EBC method 4.13

The ordinary malt that is present in the malt blend preferably has an extract content of less than 82% by weight of dry matter, more preferably of less than 81% by weight of dry matter and most preferably of 72-80% by weight of dry matter, as determined by EBC method 6.4

The lignin content of the ordinary malt in the malt blend preferably is in the range of 0.8-4% by weight of dry matter, more preferably in the range of 1.0-3.5% by weight of dry matter and most preferably in the range of 1.2-3.0% by weight of dry matter, as determined by the standard method TAPPI T 222 om-02.

The ash content of the ordinary malt preferably is more than 1.6% by weight of dry matter, more preferably more than 1.8% by weight of dry matter and most preferably in the range of 1.9-3.0% by weight of dry matter.

The ordinary malt and the peeled chit malt may be present in the malt blend in the form of ground or non-ground malt. Preferably, both malt components are present in the same form, i.e. ground or non-ground. Most preferably, the malt blend contains the ordinary malt and the peeled chit malt in non-ground form.

The malt blend of the present invention preferably has an alpha-amylase activity of at least 44 Dextrinizing Units (DU), more preferably of 46 to 100 DU and most preferably of 48 to 80 DU per gram of dry matter, as determined by EBC method 4.13.

Yet another aspect of the invention concerns a method or producing a malt beverage, said method comprising:

- providing a mixture comprising malt and water, wherein at least 1 wt.% of the malt is the peeled chit malt according to the present invention,
- mashing the mixture to convert starch into fermentable sugars and to produce a mash containing fermentable sugars; and
- subjecting the mash containing fermentable sugars to a solid-liquid separation to separate wort from insoluble matter.

Preferably at least 50 wt.%, more preferably at least 75 wt.%, most preferably 100 wt.% of the malt in the mixture comprising malt and water is barley malt.

Preferably at least 2 wt.%, more preferably at least 5 wt.%, even more preferably at least 8 wt.% and most preferably at least 10 wt.% of the malt in the mixture comprising malt and water is the peeled chit malt according to the present invention.

Typically, not more than 50 wt%, more preferably not more than 40 wt.% and most preferably not more than 35 wt.% of the malt in the mixture comprising malt and water is the peeled chit malt of the present invention.

According to a particularly preferred embodiment, the malt in the mixture comprising malt and water contains at least 90 wt.%, more preferably at least 95 wt.% and most preferably 100 wt.% of a combination of the peeled chit malt of the present invention and ordinary malt, as defined herein before.

The malt that is employed in the present method preferably has an alpha-amylase activity of at least 44 Dextrinizing Units (DU), more preferably of 46 to 100 DU and most preferably of 48 to 80 DU per gram of dry matter, as determined by EBC method 4.13.

The combination of ordinary malt and the peeled chit malt preferably constitutes 80-100 wt.%, more preferably 90-100 wt.% and most preferably 100 wt.% of the malt in the mixture comprising malt and water.

The present method preferably does not comprise addition of an enzyme preparation prior to or during the mashing. Here the term "enzyme preparation" refers to a preparation containing enzyme activity other than malt (including the peeled chit malt of the present invention).

According to a preferred embodiment the mashing is an infusion mashing. Infusion mashing is more energy- and time-efficient in comparison to other mashing methods such as decoction mashing.

The mixture comprising malt and water preferably does not comprise adjuncts.

In a particularly preferred embodiment, the solid-liquid separation of the mash comprises filtering of the mash through a filter bed that comprises at least 80 wt.%, more preferably at least 90 wt.% and most preferably 100 wt.% of insoluble material originating from the malt.

Examples of devices that may be used for such filtration include a lautertun, a mash filter and a mash/lauter vessel.

According to a particularly preferred embodiment, the present method yields a wort that is 100% malt based.

According to a particularly preferred embodiment, the wort is further processed to produce a malt beverage in the form of beer or whiskey, said further processing comprising the step of subjecting the wort to a yeast fermentation. Preferably the fermentation is a bottom fermentation.

The invention is further illustrated by the following non-limiting examples.

## EXAMPLES

### Example 1

Chit malt was produced from barley (2 rowed spring barley, origin France) as follows:
A regular malting process was followed, except that the barley was left to germinate for only 24 hours instead of 5 days.

The chit malt so obtained was peeled in batches of 100g in a Satake Test Mill (TM05C(2)-T) for 10-120 seconds.

The chit malt starting material as well as the peeled chit malts were analysed to determine moisture content, lignin content and ash content. The results are shown in Table 1.

**Table 1**

|  | Peeling time (in seconds) | | | | | |
|---|---|---|---|---|---|---|
|  | 0 | 10 | 15 | 20 | 60 | 120 |
| Amount of material removed (in wt.%) | 0 | 7.4 | 8.6 | 11.7 | 19.1 | 26.3 |
| Moisture content malt (in wt%) | 7.8 | 9.7 | 9.7 | 9.6 | 9.8 | 9.8 |
| Lignin content (% by weight of d.m.) | 1.69 | 1.23 | 0.85 | 0.58 | 0.39 | 0.04 |
| Ash content (%by weight of d.m.) | 1.98 | 1.69 | 1.56 | 1.54 | 1.36 | 1.15 |

### Example 2

Chit malt was produced from barley (2 rowed spring barley, origin France) as follows: Barley was steeped for 8 hours at 22 °C. Subsequently, it was left to germinate for 24 hours at 18 °C. During the kilning program, the temperature changed over time. It ramped up to 55 °C during the first 5.5 hours and stayed at 55 °C for 30 minutes. Then it was ramped up to 62 °C over 100 minutes, where it stayed for 7.3 hours, For the last step, the temperature was raised to 80 °C in 2.3 hours and stayed there for 2.8 hours.

The chit malt so obtained was peeled for 12 or 30 seconds. The chit malt starting material and the peeled chit malts were analysed. The results are shown in Table 3.

**Table 2**

| | Peeling time | | |
|---|---|---|---|
| | **0** | **12** | **30** |
| Amount of material removed (in wt.%) | 0 | 7.2 | 14.0 |
| Moisture content malt (in wt.%) | 8.0 | 8.0 | 8.0 |
| Alpha-amylase activity (DU/g of d.m.) | 26 | 21 | 22 |
| Beta-amylase activity (U/g of d.m.) | 14 | 14 | 15 |
| Limit dextrinase activity (U/g of d.m.) | 10 | 8 | 8 |
| Extract content - EBC 6.4 (% by weight of d.m.) | 79.5 | 83.5 | 86.2 |
| Lignin content (% by weight of d.m.) | 1.78 | 1.11 | 0.59 |
| Ash content (%by weight of d.m.) | 2.02 | 1.74 | 1.56 |
| Kolbach Index (in %) | 24.8 | 23 | 21.5 |
| S-methyl methionine ($\mu$g/L) | 0.2 | 0.2 | 0.2 |
| Dimethyl sulphide ($\mu$g/L) | <0.6 | <0.2 | <0.2 |
| Colour (EBC units) | 3.1 | 2.9 | 2.7 |
| Polyphenols | 57 | 56 | 51 |
| $C_E/(C_L{*}C_A)$ | 22.1 | 43.2 | 93.7 |

## Example 3

Two pure malt beers are produced using an identical brewing process, the only difference being that beer A is produced using 100% of ordinary malt, whereas beer B is produced using a 80:20 (w/w) blend of ordinary malt and the peeled chit malt (12 seconds of peeling) of Example 2.

The beers so obtained are subjected to a difference- from-control test using a panel of 12 trained beer testers. The results show that the beers are indistinguishable.

## Comparative Example

A chit malt was prepared from RGT Planet barley that had been mechanically dehusked to remove approximately 6 wt.% of material.

The dehusked barley was steeped, germinated and dried using the procedures summarized in Table 3.

**Table 3**

| Steeping | • Immerse 1.5 hours in steeping water of 25°C |
|---|---|
| | • Pour off water and leave uncovered for 6 hours under aeration |
| | • Immerse 1 hour in steeping water of 25°C containing 0.5 wt.% $H_2O_2$ |
| Germination | • Pour off water and leave uncovered for 15.5 hours at 25°C under aeration |
| Drying | • 50°C; ramp time: 0.5 hr. hold time:6 hrs • 60°C; ramp time: 2 hrs. hold time: 9 hrs • 30°C ramp time: 2 hrs. |

(continued)

| | hold time: 2 hrs |
|---|---|

The chit malt so obtained were analysed. The results of the analyses are shown in Table 4.

**Table 4**

| Beta-amylase activity [1] | 196 |
|---|---|
| Wort colour [2] | 1.9 |
| pH (EBC 8.17) | 4.8 |
| Final attenuation (EBC 4.11.1 | 26.1% |
| [1] MEBAK R-200.22.111 [2016-03] (A) [2] MEBAK R-205.07.110 [2016-03] (A) | |

**Claims**

1. Peeled chit malt that is obtained by a process comprising peeling of chit malt, said peeled chit malt having the following combination of features:

   (i) a moisture content of less than 15 wt.%, as determined by EBC method 4.2 (Moisture Content of Malt);
   (ii) an alpha-amylase activity of less than 58 Dextrinizing Units (DU) per gram of dry matter, as determined by EBC method 4.13 (Alpha-amylase Content of Malt);
   (iii) an extract content ($C_E$) of at least 79% by weight of dry matter, as determined by EBC method 6.4 (Extract Content of Solid Adjuncts; De Clerck Method);
   (iv) a Klason lignin content ($C_L$) of less than 1.8% by weight of dry matter, as determined by the standard method TAPPI T 222 om-02; and
   (v) an ash content ($C_A$) of less than 2.2 % by weight of dry matter;

   wherein

$$25 \leq C_E/(C_L {*} C_A) \leq 160.$$

2. Malt according to claim 1, wherein the malt has a beta-amylase activity of at least 2 units per gram of dry matter, as determined using Megazyme $\beta$-amylase assay kit (Betamyl-3).

3. Malt according to claim 1 or 2, wherein the malt has an extract content ($C_E$) of at least 82% by weight of dry matter, as determined by EBC method 6.4.

4. Malt according to any one of the preceding claims, wherein the malt has a Klason lignin content ($C_L$) of less than 1.5% by weight of dry matter, as determined by the standard method TAPPI T 222 om-02.

5. Malt according to any one of the preceding claims, wherein the malt has an ash content ($C_A$) of less than 2.0% by weight of dry matter.

6. Malt according to any one of the preceding claims, wherein $28 \leq C_E/(C_L {*} C_A) \leq 150$.

7. Malt according to any one of the preceding claims, wherein the malt has a Kolbach Index of 5-35%, as determined by EBC method 4.9.3 (Soluble Nitrogen of Malt: Dumas Combustion Method).

8. Malt according to any one of the preceding claims, wherein the malt is a ground malt, said ground malt having a bulk load density of at least 60 kg/hl and being **characterized by** the following particle size distribution, as determined using a set of sieves:

- less than 20 wt.% > 1.0 mm;
- not more than 15 wt.% ≤ 0.15 mm.

9. A process of preparing a malt according to any one of the preceding claims, said process comprising:

- providing chit malt; and
- peeling the chit malt to produce a peeled chit malt.

10. Process according to claim 9, wherein the chit malt is obtained by a malting process that employs a germination period of 12 hours to 3 days.

11. Process according to claim 9 or 10, wherein the chit malt undergoes a weight reduction of 2-18% during the peeling step.

12. Process according to any one of claims 9-11, wherein the chit malt that is provided has a Klason lignin content of at least 1.5% by weight of dry matter, as determined by the standard method TAPPI T 222 om-02.

13. Process according to any one of claims 9-12, wherein the chit malt that is provided has an ash content of at least 1.6% by weight of dry matter.

14. A malt blend comprising:

- 50-98 wt.% of an ordinary malt having an alpha-amylase activity of at least 58 Dextrinizing Units (DU) per gram of dry matter, as determined by EBC method 4.13;
- 2-50 wt.% of a peeled chit malt according to any one of claims 1-8.

15. A method of producing a malt beverage, said method comprising:

- providing a mixture comprising malt and water, wherein at least 1 wt.% of the malt is a peeled chit malt according to any one of claims 1-8;
- mashing the mixture to convert starch into fermentable sugars and to produce a mash containing fermentable sugars; and
- subjecting the mash containing fermentable sugars to a solid-liquid separation to separate wort from insoluble matter.

**Patentansprüche**

1. Geschältes Spitzmalz, das durch ein Verfahren erhalten wird, das das Schälen von Spitzmalz umfasst, wobei das geschälte Spitzmalz die folgende Kombination von Merkmalen aufweist:

(i) einen Feuchtigkeitsgehalt von weniger als 15 Gew.-%, bestimmt nach der EBC-Methode 4.2 (Feuchtigkeitsgehalt von Malz);
(ii) eine Alpha-Amylase-Aktivität von weniger als 58 Dextrinisierungseinheiten (DU) pro Gramm Trockenmasse, bestimmt nach EBC-Methode 4.13 (Alpha-Amylase-Gehalt von Malz);
(iii) einen Extraktgehalt ($C_E$) von mindestens 79 Gew.-% der Trockenmasse, bestimmt nach EBC-Methode 6.4 (Extraktgehalt fester Zusatzstoffe; De Clerck-Methode);
(iv) einem Klason-Ligningehalt ($C_L$) von weniger als 1,8 Gew.-% der Trockenmasse, bestimmt nach der Standardmethode TAPPI T 222 om-02; und
(v) einen Aschegehalt ($C_A$) von weniger als 2,2 Gew.-% der Trockenmasse;

$$25 \leq C_E / (C_L * C_A) \leq 160.$$

wobei

2. Malz nach Anspruch 1, wobei das Malz eine Beta-Amylase-Aktivität von mindestens 2 Einheiten pro Gramm Trockenmasse aufweist, bestimmt unter Verwendung des Megazyme ß-Amylase-Assay-Kits (Betamyl-3).

3. Malz nach Anspruch 1 oder 2, wobei das Malz einen Extraktgehalt ($C_E$) von mindestens 82 Gew.-% Trockenmasse aufweist, bestimmt nach EBC-Methode 6.4.

4. Malz nach einem der vorstehenden Ansprüche, wobei das Malz einen Klason-Ligningehalt ($C_L$) von weniger als 1,5 Gew.-% der Trockenmasse aufweist, bestimmt nach der Standardmethode TAPPI T 222 om-02.

5. Malz nach einem der vorstehenden Ansprüche, wobei das Malz einen Aschegehalt ($C_A$) von weniger als 2,0 Gew.-% der Trockenmasse aufweist.

6. Malz nach einem der vorstehenden Ansprüche, wobei $28 \leq C_E /(C_L *C_A ) \leq 150$ ist.

7. Malz nach einem der vorstehenden Ansprüche, wobei das Malz einen Kolbach-Index von 5-35 % aufweist, bestimmt nach der EBC-Methode 4.9.3 (Löslicher Stickstoff in Malz: Dumas-Verbrennungsmethode).

8. Malz nach einem der vorstehenden Ansprüche, wobei das Malz ein gemahlenes Malz ist, wobei das gemahlene Malz eine Schüttdichte von mindestens 60 kg/hl aufweist und durch die folgende Partikelgrößenverteilung gekennzeichnet ist, die unter Verwendung eines Siebsatzes bestimmt wurde:

   - weniger als 20 Gew.-% > 1,0 mm;
   - nicht mehr als 15 Gew.-% $\leq$ 0,15 mm.

9. Verfahren zur Herstellung eines Malzes nach einem der vorstehenden Ansprüche, wobei das Verfahren umfasst:

   - Bereitstellen von Spitzmalz; und
   - Schälen des Spitzmalzes, um geschältes Spitzmalz herzustellen.

10. Verfahren nach Anspruch 9, wobei das Spitzmalz durch einen Malzprozess erhalten wird, der eine Keimdauer von 12 Stunden bis 3 Tagen umfasst.

11. Verfahren nach Anspruch 9 oder 10, wobei das Spitzmalz während des Schälschritts eine Gewichtsreduktion von 2-18 % erfährt.

12. Verfahren nach einem der Ansprüche 9-11, wobei das bereitgestellte Spitzmalz einen Klason-Ligningehalt von mindestens 1,5 Gew.-% der Trockenmasse aufweist, bestimmt nach der Standardmethode TAPPI T 222 om-02.

13. Verfahren nach einem der Ansprüche 9-12, wobei das bereitgestellte Spitzmalz einen Aschegehalt von mindestens 1,6 Gew.-% der Trockenmasse aufweist.

14. Malzmischung, umfassend:

   - 50-98 Gew.-% eines gewöhnlichen Malzes mit einer Alpha-Amylase-Aktivität von mindestens 58 Dextrinisierungseinheiten (DU) pro Gramm Trockenmasse, bestimmt nach der EBC-Methode 4.13;
   - 2-50 Gew.-% eines geschälten Spitzmalzes nach einem der Ansprüche 1-8.

15. Verfahren zur Herstellung eines Malzgetränks, wobei das Verfahren umfasst:

   - Bereitstellen einer Mischung aus Malz und Wasser, wobei mindestens 1 Gew.-% des Malzes ein geschältes Spitzmalz nach einem der Ansprüche 1-8 ist;
   - Maischen der Mischung, um Stärke in fermentierbare Zucker umzuwandeln und eine Maische herzustellen, die fermentierbare Zucker enthält; und
   - Unterziehen der Maische, die fermentierbare Zucker enthält, einer Fest-Flüssig-Trennung, um Würze von unlöslichen Stoffen zu trennen.

**Revendications**

1. Malt chit décortiqué qui est obtenu par une procédure comprenant le décorticage du malt chit, ledit malt chit décortiqué présentant la combinaison de caractéristiques suivante :

   (i) une teneur en humidité inférieure à 15 % en poids, telle que déterminée par la méthode EBC 4.2 (teneur en humidité du malt) ;
   (ii) une activité alpha-amylase inférieure à 58 unités de dextrinisation (DU) par gramme de matière sèche, telle que déterminée par la méthode EBC 4.13 (teneur en alpha-amylase du malt) ;
   (iii) une teneur en extraits ($C_E$) d'au moins 79 % en poids de matière sèche, telle que déterminée par la méthode EBC 6.4 (teneur en extraits d'adjuvants solides ; méthode De Clerck) ;
   (iv) une teneur en lignine Klason ($C_L$) inférieure à 1,8 % en poids de matière sèche, telle que déterminée par la méthode standard TAPPI T 222 om-02 ; et
   (v) une teneur en cendres ($C_A$) inférieure à 2,2 % en poids de matière sèche ;

   où

$$25 \leq C_E/(C_L{*}C_A) \leq 160.$$

2. Malt selon la revendication 1, où le malt a une activité bêta-amylase d'au moins 2 unités par gramme de matière sèche, telle que déterminée à l'aide du kit de dosage de la $\beta$-amylase Megazyme (Betamyl-3).

3. Malt selon la revendication 1 ou 2, où le malt a une teneur en extraits ($C_E$) d'au moins 82 % en poids de matière sèche, telle que déterminée par la méthode EBC 6.4.

4. Malt selon l'une quelconque des revendications précédentes, où le malt a une teneur en lignine Klason ($C_L$) inférieure à 1,5 % en poids de matière sèche, telle que déterminée par la méthode standard TAPPI T 222 om-02.

5. Malt selon l'une quelconque des revendications précédentes, où le malt a une teneur en cendres ($C_A$) inférieure à 2,0 % en poids de matière sèche.

6. Malt selon l'une quelconque des revendications précédentes, où $28 \leq C_E/(C_L{*}C_A) \leq 150$.

7. Malt selon l'une quelconque des revendications précédentes, où le malt a un indice de Kolbach de 5 à 35 %, tel que déterminé par la méthode EBC 4.9.3 (azote soluble du malt : méthode de combustion de Dumas).

8. Malt selon l'une quelconque des revendications précédentes, où le malt est un malt moulu, ledit malt moulu ayant une masse volumique apparente d'au moins 60 kg/hl et étant **caractérisé par** la distribution granulométrique suivante, telle que déterminée à l'aide d'un ensemble de tamis :

   • moins de 20 % en poids > 1,0 mm ;
   • pas plus de 15 % en poids ≤ 0,15 mm.

9. Procédure de préparation d'un malt selon l'une quelconque des revendications précédentes, ladite procédure comprenant :

   • la fourniture de malt chit ; et
   • le décorticage du malt chit pour produire un malt chit décortiqué.

10. Procédure selon la revendication 9, où le malt chit est obtenu par une procédure de maltage qui utilise une période de germination de 12 heures à 3 jours.

11. Procédure selon la revendication 9 ou 10, où le malt chit subit une réduction de poids de 2 à 18 % pendant l'étape de décorticage.

12. Procédure selon l'une quelconque des revendications 9 à 11, où le malt chit qui est fourni a une teneur en lignine Klason d'au moins 1,5 % en poids de matière sèche, telle que déterminée par la méthode standard TAPPI T 222 om-02.

13. Procédure selon l'une quelconque des revendications 9 à 12, où le malt chit qui est fourni a une teneur en cendres d'au moins 1,6 % en poids de matière sèche.

14. Mélange de malt comprenant :

• 50 à 98 % en poids d'un malt ordinaire ayant une activité alpha-amylase d'au moins 58 unités de dextrinisation (DU) par gramme de matière sèche, telle que déterminée par la méthode EBC 4.13 ;
• 2 à 50 % en poids d'un malt chit décortiqué selon l'une quelconque des revendications 1 à 8.

15. Procédé de production d'une boisson maltée, ledit procédé comprenant :

• la fourniture d'un mélange comprenant du malt et de l'eau, où au moins 1 % en poids du malt est un malt chit décortiqué selon l'une quelconque des revendications 1 à 8 ;
• le brassage du mélange pour convertir l'amidon en sucres fermentables et produire un moût contenant des sucres fermentables ; et
• la soumission du moût contenant des sucres fermentables à une séparation solide-liquide afin de séparer le moût de la matière insoluble.

**EP 4 519 406 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4004034 A
- GB 140391 A
- US 3708002 A
- US 3647473 A
- DE 4428978
- GB 445650 A
- WO 2007121594 A


**Non-patent literature cited in the description**

- **HOLMES, M. GLENNIE**. The pearling of barley malt as an early generation selection tool in barley breeding programmes. *Journal of the Institute of Brewing*, 1990, vol. 96 (1), 21-26
- **HOLMES, M. GLENNIE**. The use of partially-modified barley for malting quality assessment. *Journal of the Institute of Brewing*, 1991, vol. 97 (4), 283-289
- **AGU R C et al.** Malting performance of normal huskless and acid-dehusked Barley samples. *Journal of the Institute of Brewing*, 2002, vol. 108 (2), 215-220
- *Thiobarbituric Acid Index*, 2009
- **MACKIE ; SLAUGHTER**. Formation of 4-hydroxy-furanones and their precursors during production of worts and beers. *J. Inst. Brew.*, 2002, vol. 108, 336-343

**17**